# FASCICULE DE BREVET EUROPEEN

(11) **EP 0 653 486 B1**
(45) Date de publication et mention de la délivrance du brevet: **05.04.2000**
(21) Numéro de dépôt: 93402770.7
(22) Date de dépôt: 16.11.1993
(51) Int. Cl.: C12G 1/08, C12C 11/00

(54) **Machine de traitement du vin selon la methode champenoise**
Vorrichtung, die die Behandlung des Weines nach der Champagner-Methode erlaubt
Machine for the treatment of wine by the champagne process

(43) Date de publication de la demande: 17.05.1995
(73) Titulaire: Mainguet, René, F-51530 Vinay (FR)
(72) Inventeur: Mainguet, René, F-51530 Vinay (FR)
(74) Mandataire: Viard, Jean

(56) Documents cités:
- BE-A- 703 196
- DE-A- 3 516 125
- FR-A- 2 120 245
- FR-A- 2 630 425

## Description

La présente invention a pour objet une machine de traitement du vin selon la méthode champenoise.

On sait que cette méthode d'élaboration du vin comprend un certain nombre d'opérations et, en particulier, une seconde fermentation en bouteille. Après cette seconde fermentation, il est nécessaire d'évacuer le dépôt, qui est, à cette fin rassemblé et congelé dans le haut du goulot, par une opération dite de dégorgement. Cette opération consiste à chasser le dépôt sous l'action de la pression interne à la bouteille qui est de l'ordre de six bars. Après ce dégorgement, on doit prélever une certaine quantité de vin et introduire la quantité nécessaire de liqueur pour ajuster le degré en alcool de celui-ci, puis ajouter du vin dans la bouteille à niveau réglementaire.

Ces opérations, autrefois effectuées manuellement ,ont été partiellement ou totalement automatisées. Mais, chacune de ces opérations nécessite une machine particulière. Il existe toutefois des machines intégrées de dosage et remplissage dont les capacités peuvent atteindre 5000 bouteilles par heure. Mais ces machines ne permettent pas de traiter de petites quantités de bouteilles et, leur coût est excessif pour de tels besoins.

La présente invention a pour objet une machine compacte à carrousel permettant de soumettre une bouteille à quatre opérations successives en continu et dans le respect du vin.

Selon la présente invention, la machine à carrousel de tirage, dégorgement, vidangeage, dosage, mise à niveau automatiques est caractérisée en ce que les bouteilles sont entraînées autour d'un axe vertical, en des positions inclinées, sur des sellettes montées pivotantes sur une couronne rotative, chaque sellette comprenant un galet coopérant avec une came centrale fixe.

Ainsi, le mouvement des bouteilles, bien que rapide, est toujours sans heurts ce qui est désirable compte tenu de la pression régnant à l'intérieur de la bouteille qui est ouverte avec une forte pression interne. Grâce à la came, les bouteilles, au cours de leur rotation de sensiblement 180° autour d'un arbre vertical, entre le chargement et le déchargement, prennent différentes inclinaisons et, par exemple une inclinaison moyenne de 20° qui atteint 40° lors du dégorgement et 65° lors du dosage. Par contre, lors de la mise à niveau, la bouteille doit être verticale. La bouteille est libre au moment du chargement et du déchargement.

Selon une autre caractéristique de l'invention, les bouteilles sont maintenues sur les sellettes uniquement par leur col ce qui permet de les charger et décharger facilement et d'utiliser la machine pour des bouteilles de capacités différentes. Elles reposent chacune sur une sellette par leur propre poids et le mouvement du carrousel les amène successivement sous les différentes têtes de travail.

Dans le cas de fonctionnement de la machine en dégorgeuse, le col est maintenu , lors de l'éjection de la capsule, par une pince qui s'ouvre automatiquement dès que le dégorgement est effectué. Cette pince montée à la partie supérieure des sellettes peut être aisément montée et démontée.

D'autres caractéristiques et avantages de l'invention apparaîtront au cours de la description qui va suivre d'un mode de réalisation particulier, donné uniquement à titre d'exemple non limitatif, en regard des dessins qui représentent :
- La Figure 1, une vue en perspective de la machine ;
- La Figure 2, un schéma de l'inclinaison des bouteilles;
- La Figure 3, une vue des sellettes dans le cas de l'emploi en doseuse;
- Les Figures 4 et 5, des vues en perspective de la fermeture des pinces;
- La Figure 6 , le mouvement du couteau de dégorgement par rapport au col et sa position après éjection de la capsule.

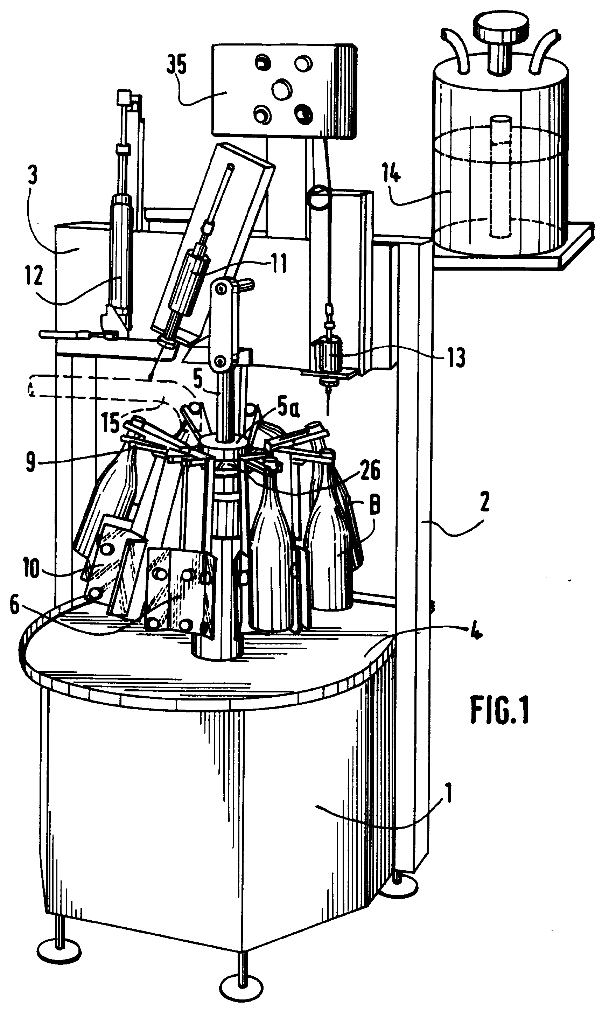

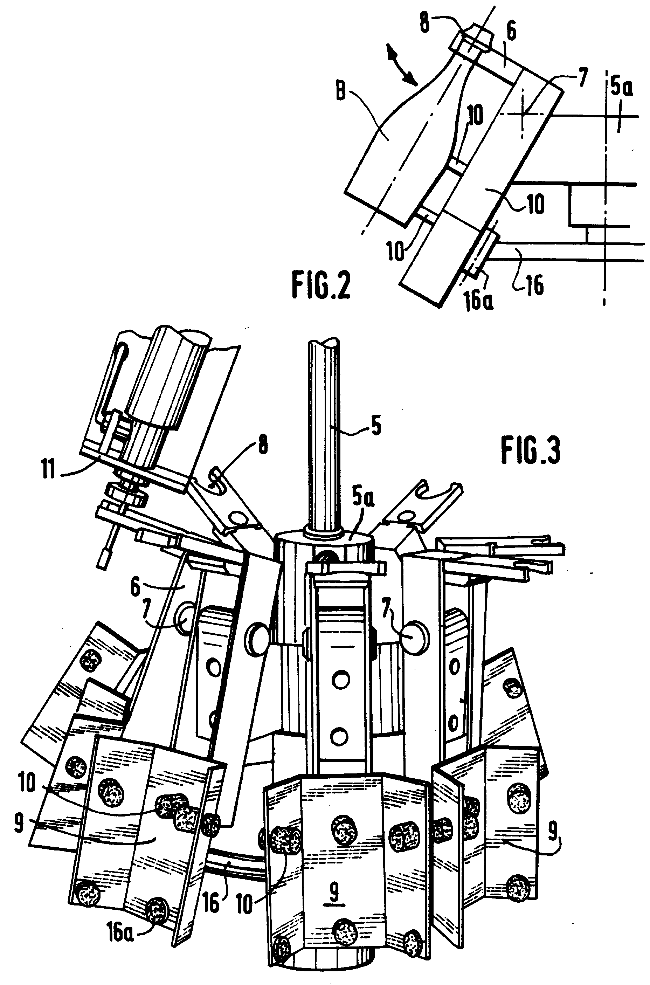

Sur la figure 1, on voit que la machine se compose de bas en haut d'un socle 1 qui, dans l'exemple représenté, est octogonal et qui repose au sol sur des pieds (non référencés) réglables en hauteur. Sur deux côtés opposes s'étendent verticalement deux montants 2 réunis à leur partie supérieure par une platine 3 destinée à supporter les têtes de travail et différents organes de service. Le socle 1 renferme un moteur électrique (non représenté) au dessus duquel est disposé un plateau 4. De préférence, l'ensemble est réalisé en acier inoxydable. Un arbre 5 fait saillie verticalement au centre du plateau. Sur une couronne rotative 5a, tournant sur l'arbre fixe 5 sont montées des sellettes 6 qui, dans l'exemple représenté, sont au nombre de huit. Les sellettes 6 sont articulées à leur partie supérieure autour d'axes horizontaux 7 ( voir Fig.3) et constituent un support pour les bouteilles B dont le col est maintenu par une échancrure semi-circulaire 8, leur corps reposant sur un support 9 muni de cales 10 de préférence élastiques dont la hauteur est variable en fonction du diamètre de la bouteille à traiter. Ainsi, la bouteille est maintenue par son col alors que son corps repose sur la sellette 6 par l'intermédiaire des cales 10. On a représenté sur la figure 1 une pompe d'aspiration 11 permettant d'effectuer le vidangeage de la bouteille, c'est à dire l'extraction de quelques centilitres de vin qui seront remplacés au moins en partie par de la liqueur. Le vin prélevé est dirigé dans un réservoir ( non représenté). A coté de la pompe 11, se trouve une seconde pompe 12 ou pompe doseuse destinée à prélever la quantité voulue de liqueur dans un réservoir et à l'introduire dans la bouteille après extraction du vin excédentaire. Enfin, une troisième pompe 13 prélève du vin dans le réservoir 14 pour ajuster le niveau du mélange vin-liqueur dans la bouteille. Le réservoir 14 est vidangeable et peut être, à la fin d'une opération , rempli d'eau pour nettoyer automatiquement toutes les canalisations. Les pompes 11,12 et 13 sont des pompes disponibles dans le commerce. Un tableau de commande 35 comprend un automate assurant d'une part l'entraînement pas à pas du moteur et par suite des bouteilles et tous les dispositifs de sécurité nécessaires, y compris un bouton d'arrêt d'urgence.

Sur la figure 2, on voit que, en fonction de la configuration d'une came 16, les sellettes et par suite les bouteilles maintenues par leur col peuvent prendre différentes inclinaisons autour d'un axe horizontal 7. La figure 3 représente quelques sellettes dans la version doseuse de la machine, c'est à dire sans les pinces nécessaires au dégorgement.

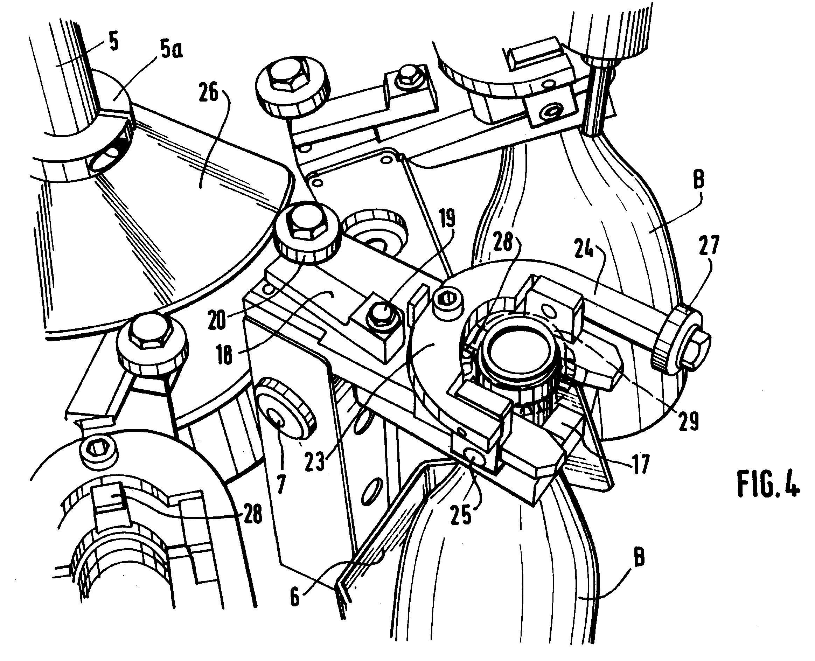

Sur la Fig.1, le dispositif de dégorgement 15 est représenté schématiquement en traits pointillés dans un souci de clarté. Il sera décrit ci-dessous en regard des figures 4 à 6. Le dégorgement consiste comme indiqué précédemment à évacuer le dépôt et, pour ce faire, il faut décapsuler la bouteille, évacuer la capsule et le bidule qui est une sorte de bouchon interne en matière plastique et enfin le bouchon de glace rassemblant le dépôt. Dans la version de la machine en dégorgeuse, la bouteille doit être maintenue contre la sellette pour éviter que le couteau glisse sur la capsule. Alors que lorsque la machine est simplement doseuse,la bouteille n'est maintenue sur la sellette que par une simple encoche 8. Il faut, pour chasser la capsule, pincer le col. Ce pincement est favorisé par le fait que les cols de toutes les bouteilles sont de dimensions normalisées.

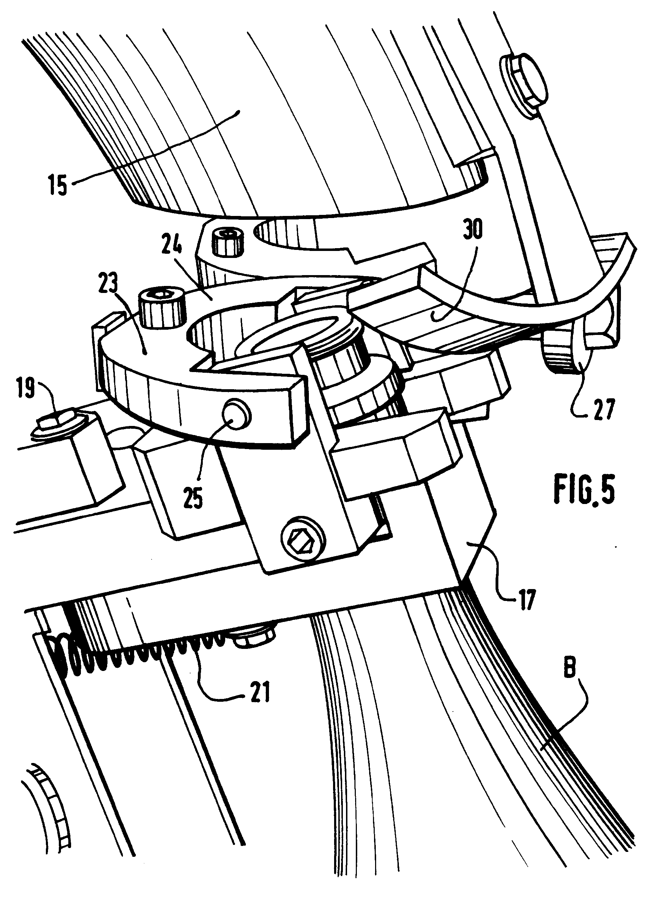

Les figure 4 et 5 représentent une bouteille dont le col est maintenu en position par une pince 17. Après introduction dans la machine, la bouteille se présente, après une rotation de sensiblement un huitième de tour, au-dessous du poste de dégorgement qui se caractérise par la présence d'un conduit d'évacuation 15 au-dessous duquel se présente la bouteille. Comme cela apparaît sur la Fig.4, une pince 17 vient entourer le col de la bouteille B pour maintenir celui-ci sur la sellette. La pince 17 est manoeuvrée par un levier 18 articulé avec la pince 17 sur un axe 19 solidaire de la sellette. A l'extrémité libre du lever 18 est monté un galet 20 qui, lors du déplacement des sellettes, vient porter sur une came 26 fixe. Par le roulement du galet sur la came 26, à l'encontre d'un ressort de rappel 21 (Fig.5), Le galet 20 est poussé vers l'extérieur par la came. La pince 17 pivote autour de l'axe 19 de manière à vernir fermer l'échancrure 8 comme cela apparaît sur les figures 4 et 5 ce qui immobilise la bouteille B contre la sellette 6. Dès que le galet 20 ne porte plus sur la came 26, le ressort de rappel 21 libère la pince 17 qui reprend sa position d'origine, la bouteille n'étant plus maintenue que par l'échancrure 8.

Alors que la pince 17 est encore fermée, le décapsulage s'effectue de la façon suivante :
A la partie supérieure de chaque sellette 6 est articulée une pièce en forme d'étrier constituée de deux branches 23,24, chacune des branche étant articulée sur un demi axe 25 comme cela apparaît sur le figure 4. La branche 24 se prolonge au-delà de l'axe 25 et porte à son extrémité un galet 27. Au centre de l'étrier se trouve un couteau 28 qui, avant le dégorgement, se trouve immédiatement au-dessous de la capsule 29.

Par ailleurs, le conduit d'évacuation 15 porte une came 30 contre laquelle vient porter le galet 27 lorsque la bouteille arrive en position de dégorgement. Le contact du galet 27 sur le came 30 provoque le pivotement de l'étrier vers le haut et par suite du couteau 28. Le couteau 28 au cours de ce mouvement dégage la capsule 29 qui est aspirée par le conduit 15 qui est de préférence muni d'un dispositif d'aspiration de type "VENTURI". Sous l'action de la pression régnant à l'intérieur de la bouteille, le bidule et le bouchon de glace sont éjectés et aspirés dans le conduit 15.

Comme il a été expliqué précédemment, la pince s'ouvre et la bouteille poursuit sa course vers les postes de prélèvement, de dosage et de mise à niveau.

Dans sa version doseuse uniquement, la machine ne comprend qu'une came centrale fixe 16 qui commande les inclinaisons des bouteilles sur le carrousel en fonction des opérations effectuées. Dans sa version dégorgeuse, la machine comprend une seconde came fixe 26 montée à la partie supérieure de l'arbre 5 qui commande la fermeture des pinces 17 et une troisième came fixe 30, solidaire du conduit d'évacuation 15, qui commande les mouvements du couteau 28. Toutes ces opérations sont ainsi commandées par la rotation de la couronne 5a sur l'arbre fixe 5 qui provoque l'actionnement des leviers portant sur lesdites cames par l'intermédiaire de galets 16 a, 20 et 27.

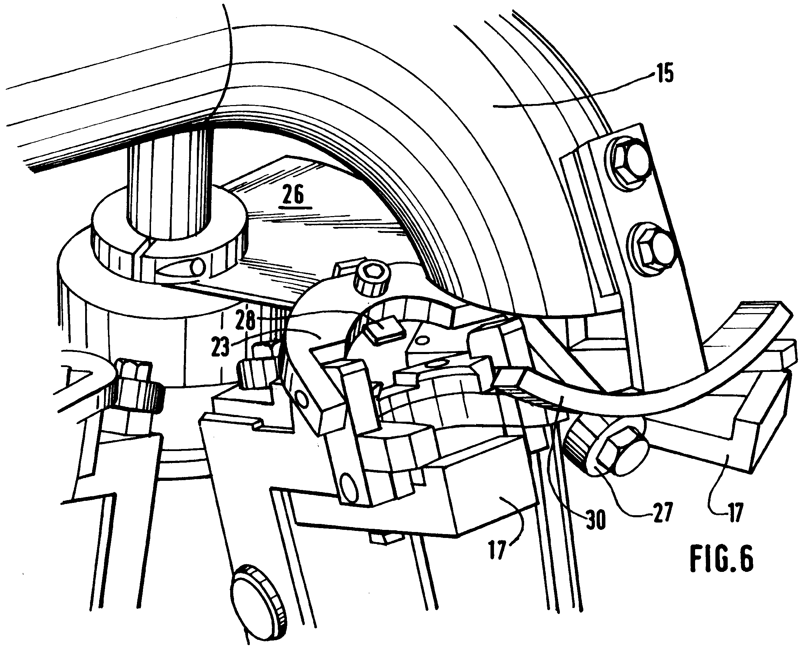

La figure 6 représente la machine en fin de dégorgement, la bouteille n'étant pas représentée dans un souci de clarté. Le couteau 28 est relevé, la pince 17 est encore fermée et la forme de la came 30 ramène le couteau vers le bas.

Les bouteille après le poste de dégorgement passent devant le poste de prélèvement et le vin prélevé est dirigé vers le bac récupérateur 3 puis le dosage intervient. Afin de ne pas brusquer le vin, la bouteille est inclinée à 65°sur ce poste pour que le gaz ne s'échappe pas et pour que la liqueur glisse progressivement, la pression interne à la bouteille étant maintenue. Puis, la bouteille est ramenée en position verticale pour la mise à niveau réglementaire au-dessous du poste 13.

Bien entendu, en fonction des besoins, la machine qui vient d'être décrite peut être utilisée pour le tirage (remplissage des bouteilles), pour le dosage uniquement si le poste de dégorgement est rendu inactif, ou pour l'ensemble de ces opérations, le mode de fixation est bouteilles sur la machine étant particulièrement simple et s'adaptant aisément à toutes les formes et contenances de celles-ci.

## Revendications

1. Machine de traitement du vin selon la méthode champenoise pour le tirage, dégorgement, vidangeage, dosage, et la mise à niveau automatiques caractérisée en ce que les bouteilles sont entraînées, en position inclinée, autour d'un axe vertical (5) sur des sellettes (6) montées pivotantes sur un carrousel (5a), chaque sellette (6) comprenant un galet (16a) coopérant avec une came centrale fixe (16), le mouvement de rotation pas à pas de l'axe (5) amenant successivement les bouteilles au-dessous de différents postes de travail (15,11,12,13).

2. Machine selon la revendication 1, caractérisée en ce que les bouteilles (B) sont maintenues sur les sellettes (6) par leur col s'engageant dans une échancrure (8), le corps des bouteilles reposant sur un support (9) muni de cales élastiques (10) dont la hauteur varie en fonction de la contenance de la bouteille.

3. Machine selon l'une des revendications 1 ou 2, caractérisée en ce que ,au niveau du poste de dégorgement les cols des bouteilles sont serrés par une pince (17) commandée par un lever (18) dont une extrémité porte un galet (20) venant en contact avec une came fixe (26).

4. Machine selon l'une quelconque des revendications précédentes, caractérisée en ce que un couteau (28) d'éjection de la capsule est monté sur un support (23,24) pivotant autour d'un axe (25) sous l'action d'un galet (27) se déplaçant sur une came (30) solidaire d'un conduit d'évacuation (15).

5. Machine selon l'une quelconque des revendications précédentes, caractérisée en ce qu'elle comprend un réservoir (14) de réserve de vin servant, après vidange, au nettoyage des canalisations.

6. Machine selon l'une quelconque des revendications précédentes, caractérisée en ce qu'elle présente un conduit (15) de dégorgement pour recevoir les capsules, bidules et bouchons de glace.

7. Machine selon la revendication 6, caractérisée en ce que le conduit (15) est muni d'un système d'aspiration à "VENTURI".

8. Machine selon l'une quelconque des revendications précédentes, caractérisée en ce qu'elle comprend, sur un arbre fixe (5) une première came fixe (16) d'inclinaison des bouteilles, et une seconde came fixe (26) de fermeture des pinces (17), une troisième came fixe (30) étant solidaire du conduit d'aspiration (15).

## Claims

1. A method of treating wine by the champagne method for automatic filling, disgorging, sediment removal, liqueuring, and topping up, characterized in that the bottles are driven in an inclined position around a vertical shaft (5) on holders (6) pivotally mounted on a carousel (5a), each holder (6) having a wheel (16a) co-operating with a stationary central cam (16), stepwise rotary motion of the shaft (5) bringing the bottles in succession into register with various workstations (15, 11, 12, 13).

2. A machine according to claim 1, characterized in that the bottles (B) are held on the supports (6) via their necks engaging in notches (8), the bodies of the bottles resting on supports (9) fitted with resilient spacers (10) of height that varies as a function of the amount contained in the bottle.

3. A machine according to claim 1 or 2, characterized in that in the station for disgorging, the necks of the bottles are held by a clamp (17) controlled by a lever (18) having one end carrying a wheel (20) that comes into contact with a stationary cam (26).

4. A machine according to any preceding claim, characterized in that a capsule-ejection knife (28) is mounted on a support (23, 24) that pivots about an axis (25) under drive from a wheel (27) moving over a cam (30) secured to a removable duct (15).

5. A machine according to any preceding claim, characterized it that it includes a tank (14) containing a supply of wine which is used, after sediment removal, for cleaning the pipes.

6. A machine according to any preceding claim, characterized in that it has an extraction duct (15) for receiving the capsules, the plastics plugs, and the ice plugs.

7. A machine according to claim 6, characterized in that the duct (15) is provided with a Venturi suction system.

8. A machine according to any preceding claim, characterized in that, on a stationary shaft (5), it comprises: a first stationary cam (16) for tilting the bottles; and a second stationary cam (26) for closing the clamps (17); a third stationary cam (30) being secured to the suction duct (15).

## Patentansprüche

1. Vorrichtung, die die Behandlung des Weines nach der Champagner-Methode erlaubt, zum automatischen Entkorken, Degorgieren, Abgießen, Dosieren und Auffüllen, dadurch gekennzeichnet, daß die Flaschen in geneigter Stellung auf schwenkbar an einem Karussell (5a) aufgenommenen Auflageschalen (6) um eine vertikale Achse (5) bewegt werden, wobei jede Auflageschale (6) eine mit einem feststehenden zentralen Nocken (16) zusammenwirkende Rolle (16a) aufweist und die Flaschen durch die schrittweise Drehbewegung der Achse (5) nacheinander unter verschiedenen Arbeitsstationen (15, 11, 12, 13) hindurch transportiert werden.

2. Vorrichtung nach Anspruch 1, dadurch gekennzeichnet, daß die Flaschen (B) dadurch auf den Auflageschale (6) gehalten werden, daß ihr Hals in einem bogenförmigen Ausschnitt (8) liegt, wobei der Flaschenkörper auf einer Auflage (9) ruht, die mit elastischen Futterkeilen (10) mit in Abhängigkeit vom Flascheninhalt unterschiedlicher Höhe ausgestattet ist.

3. Vorrichtung nach Anspruch 1 oder 2, dadurch gekennzeichnet, daß die Flaschenhälse in der Degorgierstation von einer Zange (17) erfaßt werden, die über einen Hebel (18) betätigt wird, dessen eines Ende eine an einem feststehenden Nocken (26) in Anlage kommende Rolle (20) trägt.

4. Vorrichtung nach einem der vorhergehenden Ansprüche, dadurch gekennzeichnet, daß auf einer Halterung (23, 24) ein Messer (28) zum Entfernen der Kapsel angeordnet ist, wobei die Halterung unter der Wirkung einer Rolle (27), die auf einem an einer Absaugleitung (15) befestigten Nocken (30) läuft, eine Schwenkbewegung um eine Achse (25) vollführt.

5. Vorrichtung nach einem der vorhergehenden Ansprüche, dadurch gekennzeichnet, daß ein Weinvorratsbehälter (14) vorgesehen ist, der nach dem Abgießen zur Reinigung der Leitungen dient.

6. Vorrichtung nach einem der vorhergehenden Ansprüche, dadurch gekennzeichnet, daß eine Degorgierleitung (15) zum Aufnehmen der Kapseln, Abfälle und Eispfropfen vorgesehen ist.

7. Vorrichtung nach Anspruch 6, dadurch gekennzeichnet, daß die Leitung (15) mit einem ''Venturi"-Absaugsystem ausgestattet ist.

8. Vorrichtung nach einem der vorhergehenden Ansprüche, dadurch gekennzeichnet, daß auf einer festen Welle (5) ein erster feststehender Nocken (16) zum Neigen der Flaschen und ein zweiter feststehender Nocken (26) zum Schließen der Zange (17) vorgesehen sind und daß ein dritter feststehender Nocken (30) an der Absaugleitung (15) befestigt ist.
